# EUROPÄISCHE PATENTSCHRIFT

(11) **EP 2 537 707 B1**
(45) Veröffentlichungstag und Bekanntmachung des Hinweises auf die Patenterteilung: **21.10.2015**
(21) Anmeldenummer: 12172425.6
(22) Anmeldetag: 18.06.2012
(51) Int. Cl.: B60P 7/13

(54) **Horizontalverriegelungsvorrichtung**
Horizontal locking device
Dispositif de verrouillage horizontal

(30) Priorität: 20.06.2011 DE 202011050490 U
(43) Veröffentlichungstag der Anmeldung: 26.12.2012
(73) Patentinhaber: RMM Metternich Mechatronik GmbH, 21244 Buchholz (DE)
(72) Erfinder: Metternich, Heinz-Rüdiger, 21279 Eversen-Heide (DE)
(74) Vertreter: Hansen, Jochen

(56) Entgegenhaltungen:
- EP-A2- 1 900 571
- US-A- 3 628 222
- US-A- 5 575 599

## Beschreibung

Die Erfindung betrifft eine Horizontalverriegelungsvorrichtung zur Verriegelung eines Containers mit Eckbeschlag auf einem Transportfahrzeug, insbesondere für Gooseneck-Auflieger, mit einer Halterung, die im Beladungszustand mit dem Container horizontal neben dem Eckbeschlag und naheliegend an einer Anlagefläche des Eckbeschlags auf dem Transportfahrzeug angeordnet ist, wobei an der Halterung ein Schwenkriegel vorgesehen ist, der um eine parallel zur Anlagefläche des Eckbeschlages und horizontal angeordnete Schwenkachse von einer Grundstellung in eine nach unten geschwenkte Verriegelungsstellung, in der der Schwenkriegel in den Eckbeschlag eingreift, schwenkbar ist, wobei ein Rastmittel, das bei Erreichen der Verriegelungsstellung den Schwenkriegel in dieser Stellung verrastet, und ein Vorauslösemittel, das bei Betätigung die Verrastung des Schwenkriegels freigibt, so dass der Container entladen werden kann, vorgesehen sind.

Eine derartige Horizontalverriegelung ist aus der EP 1 900 571 A2 bekannt. Diese für die Verwendung bei Bahntragwagen ausgerichtete Verriegelung weist zwar eine vom Gewicht des Containers auf einen kurzen Hebelarm beaufschlagte Betätigung des seitlich in den Eckbeschlag des Containers eingreifenden Sperrteils auf, jedoch sind der kurze Hebelarm und das in den Eckbeschlag einzugreifende Sperrteil zwei gesondert voneinander bewegliche Teile, die lediglich über eine Druckfeder verbunden sind. Ferner ist anzumerken, dass das um die Schwenkachse schwenkbare Bauteil mit dem kurzen Hebelarm seine Grundstellung (vorbereitet zur Beladung) allein Gewichtskraft bedingt einnimmt. Der gesondert schwenkbare Sperrteil wird kraftlos über die Druckfeder in einer Position gehalten, die zur Beladung geeignet ist.

Ferner sind Horizontalverriegelungsvorrichtungen an Gooseneck-Aufliegern bekannt. Sie werden an der in Fahrtrichtung vordersten Position am Auflieger verwendet, um Container mit Gooseneck-Tunnel in ihrer vorderen Position vor Abheben und Verrutschen zu sichern. An dieser Position ist nicht genügend Freiraum unterhalb des Containers, um die üblicherweise zur Fixierung von Standardcontainern auf einem Auflieger verwendeten sogenannten "Twistlocks" mit dem dafür erforderlichen Unterbau (Querträger) vorzusehen. Da man jedoch durch Verwendung der Gooseneck-Chassis mit sogenannten High Cube Containern mit Gooseneck-Tunnel etwa 10 bis 14 cm mehr nutzbare Ladehöhe erhält, ohne die international häufig vorgeschriebene Gesamtladehöhe des Sattelzuges von 4 m zu überschreiten, ist dieser erhebliche Aufwand gerechtfertigt.

Um auf derartigen Gooseneck-Aufliegern bzw. Chassis auch Container ohne Gooseneck-Tunnel verladen zu können, sind sogenannte Doppelverriegelungen bekannt, bei denen eine um eine horizontale Achse schwenkbare Konsole so an die Position des Riegelbolzens herunterklappbar ist, dass diese Konsole mit dem Riegelbolzen verrastbar ist und eine erhöhte Auflagefläche für Container ohne Gooseneck-Tunnel bietet. An dieser Konsole ist meist ein herkömmliches Twistlock für die Verriegelung des Containers vorgesehen. Eine derartige Doppelverriegelung ist beispielsweise von der Firma Jost-Werke GmbH, Siemensstraße 2, 63263 Neu-Isenburg, unter der Bezeichnung FB 88-14V bekannt.

Eine derartige Doppelverriegelung ist auch in der EP 0 934 848 A2 beschrieben. Ergänzend ist bei derartigen Doppelverriegelungen die Verwendung einer halbautomatischen Verriegelung für die erhöhte Position von der belgischen Firma Container Quick Lock NV unter der Bezeichnung TQL bekannt. Die darin verwendete halbautomatische Verriegelung ist in der EP 1 937 511 B1 beschrieben.

Ferner sind vollautomatische Containerverriegelungen, die von der Gewichtskraft des Containers betätigt werden, in unterschiedlicher Ausgestaltung bekannt. Beispielhaft wird auf die EP 1 800 946 A2, die DE 10 2007 007 067 A1 und die DE 20 2009 016 268 verwiesen.

Nachteilig ist jedoch, dass die erstgenannten Horizontalverriegelungen, insbesondere wie sie für Gooseneck-Auflieger an der vordersten Position des Aufliegers für die Fixierung von Containern mit Gooseneck-Tunneln verwendet werden, manuell verriegelt und manuell gelöst werden müssen. Vor dem Entladen und nach dem Beladen müssen die bekannten Horizontalverriegelungen somit jeweils manuell betätigt werden. Dies ist neben dem Zeitaufwand auch ein erhebliches Gefährdungspotential für den Kraftfahrer.

Daher wurde in der DE 20 2010 000 387 eine Horizontalverriegelungsvorrichtung mit einer Halbautomatik vorgeschlagen, bei der der Riegelbolzen eine Federbelastung in Richtung des Transportzustandes und an seinem dem Eckbeschlag zugewandten Ende eine Auflaufschräge aufweist, wobei der Riegelbolzen eine erste Rastposition für den Transportzustand des Riegelbolzens und eine zweite Rastposition für den eingezogenen Entladezustand hat und ein Tastmittel zur Feststellung des Beladezustandes der Ladefläche vorgesehen ist, wobei zum Entladen der Riegelbolzen manuell in den Entladezustand gebracht und nach dem Entladen der Riegelbolzen vom Tastmittel freigegeben wird. Somit wird eine automatische Verriegelung und Verrastung des Containers beim Beladen ermöglicht. Das neben dem Riegelbolzen angeordnete Tastmittel erlaubt die Feststellung, dass in der Ladeposition ein Container aufliegt. Nachteilig ist, dass das Tastmittel vielteilig ausgebildet ist und aufgrund seiner Komplexität, beispielsweise bei ungenügender Wartung, zu Fehlfunktionen führen kann und die Verriegelungsvorrichtung in der Herstellung kostenaufwendig ist.

Die US 3 628 222 beschreibt eine Verriegelungsvorrichtung mit zwei Schwenkriegeln, die um zwei übereinander angeordnete, horizontale Achsen schwenkbar gehaltert sind, bei dem der obere Schwenkriegel in einen Eckbeschlag eines Containers eingreifen kann und der untere Schwenkriegel zur Verrastung des oberen Schwenkriegels in der verriegelten Position dient.

Aufgabe der Erfindung ist es daher, eine Horizontalverriegelungsvorrichtung anzugeben, die bei halbautomatischer Funktion möglichst einfach und kostengünstig konstruiert ist.

Gelöst wird diese Aufgabe mit einer Horizontalverriegelungsvorrichtung gemäß Anspruch 1. Dadurch, dass der Schwenkriegel in Richtung seiner Grundstellung mit einer ersten Feder vorbelastet ist und beim Beladen vom Gewicht des Containers gegen seine Vorbelastung in die Verriegelungsstellung verschwenkt wird und der Schwenkriegel einstückig zwei im Wesentlichen radial zur Schwenkachse vorstehende Elemente aufweist, nämlich einen Betätigungshebel, mit dem der Eckbeschlag des Containers beim Absetzen zum Verschwenken des Schwenkriegels zusammenwirkt, und ein oberhalb angeordnetes Riegelelement, das mit einer seitlichen Öffnung des Eckbeschlags beim Absetzen des Containers in Eingriff gelangt, wird eine weitere kontruktive Vereinfachung gegenüber der bekannten Bahnverriegelung gemäß EP 1 900 571 A2 erreicht. Erfindungsgemäß ist der Schwenkriegel mit seinem Betätigungshebel, der von der Gewichtskraft des Containers betätigt wird, und das Riegelelement, das in den Eckbeschlag eingreift, einstückig hergestellt. Damit ist sichergestellt, dass stets eine definierte geometrische Anordnung und Beziehung zwischen dem Betätigungshebel und dem Riegelelement besteht. Der erfindungsgemäße Schwenkriegel liegt dabei in seiner zur Beladung bereiten Grundstellung mit einer Feder vorbelastet vor, so dass in dieser Grundstellung eine zusätzliche Verrastung nicht erforderlich ist. Beim Beladen wird der Schwenkriegel durch die Gewichtskraft des Containers betätigt, dass der nahe der Verriegelungsvorrichtung sich absenkende Eckbeschlag des Containers den Schwenkriegel entgegen seiner Vorbelastung in die Verriegelungsstellung verschwenkt, wobei der Schwenkriegel dann bei Erreichen der Verriegelungsstellung mit dem Rastmittel gesichert wird.

Ferner ist ein Vorauslösemittel vorgesehen, das bei Betätigung die Verrastung der Schwenkriegel freigibt, so dass der Container entladen werden kann. Der Kraftfahrer kann somit beispielsweise in einem sicheren Bereich vor dem Abheben des Containers die Verriegelung so vorauslösen, dass eine ungehinderte Entladung stattfinden kann.

Um ein selbsttätiges Verschwenken des Schwenkriegels beim Beladen des Containers in einfacher Gestaltung zu erreichen, weist der Schwenkriegel zwei im Wesentlichen radial zur Schwenkachse vorstehende Elemente auf, nämlich einen Betätigungshebel, mit dem der Eckbeschlag des Containers beim Absetzen zum Verschwenken des Schwenkriegels zusammenwirkt, und ein oberhalb angeordnetes Riegelelement, das mit einer seitlichen Öffnung des Eckbeschlags beim Absetzen des Containers in Eingriff gelangt. Besonders sind dabei das Riegelelement und der Betätigungshebel auf einer Radialebene bezogen auf die Schwenkachse in einem Winkel α mit 45°≤ α ≤ 90, bevorzugt α = 60° zueinander angeordnet. Der Schwenkriegel schwenkt somit beim Beladen um ca. 60° Grad von seiner Grundstellung in die Verriegelungsstellung, wobei das Riegelelement in eine seitliche Öffnung des Eckbeschlags des Containers eingreift.

Dadurch, dass das Rastmittel einen in der Halterung zur Schwenkachse parallel angeordneten, axial beweglichen Bolzen aufweist, der in der Verriegelungsstellung des Schwenkriegels mit einer Öffnung im Schwenkriegel verrastbar ist, wird der Schwenkriegel in seiner Verriegelungsstellung sicher mit einer hohen Ausbrechkraft verrastet.

Wenn das Vorauslösemittel eine Zugstange und eine Kulissenführung aufweist, wobei die Kulissenführung mit dem Bolzen zum axialen Bewegen zusammenwirkt und die Zugstange und damit der Bolzen in Richtung seiner Verrastungsstellung vorbelastet sind, wird die automatische Verrastung der Horizontalverriegelungsvorrichtung bei Erreichen der den Container haltenden Verriegelungsstellung auf einfache und wirksame Weise erreicht. Ferner ist über die Zugstange ein manuelles Betätigen des Vorauslösemittels erleichtert, da die Zugstange zu einer für den Kraftfahrer gut zugänglichen Stelle geführt werden und beispielsweise mit einer Zugöse versehen sein kann.

Wenn das Vorauslösemittel einen beweglichen Anschlag hat, der nach Betätigung der Zugstange die Vorbelastung auf die Verrastungsstellung abfängt und nach dem Entladevorgang freigibt, wird vermieden, dass die Horizontalverriegelungsvorrichtung nach Betätigung des Vorauslösemittels vor dem Entladen des Containers verrastet. Der Anschlag kann beispielsweise über eine Wippe beweglich gestaltet werden.

Bevorzugt ist die Zugstange mit einer zweiten Feder in Richtung der Verrastungsstellung vorbelastet.

Nachfolgend wird ein Ausführungsbeispiel der Erfindung anhand der beiliegenden Zeichnungen detailliert beschrieben:
Darin zeigt:
   - Fig. 1: eine Horizontalverriegelungsvorrichtung in Grundstellung in einer Seitenansicht,
   - Fig. 2: die in Fig. 1 dargestellte Situation nach dem Verriegeln,
   - Fig. 3: die in Fig. 2 dargestellte Situation nach Vorauslösung,
   - Fig. 4: die in Fig. 1 dargestellte Horizontalverriegelungsvorrichtung in einer räumlichen Teilansicht,
   - Fig. 5: die in Fig. 4 dargestellte Vorrichtung in Verriegelungszustand und
   - Fig. 6: die in Fig. 4 und Fig. 5 dargestellte Vorrichtung im Zustand nach Vorauslösung.

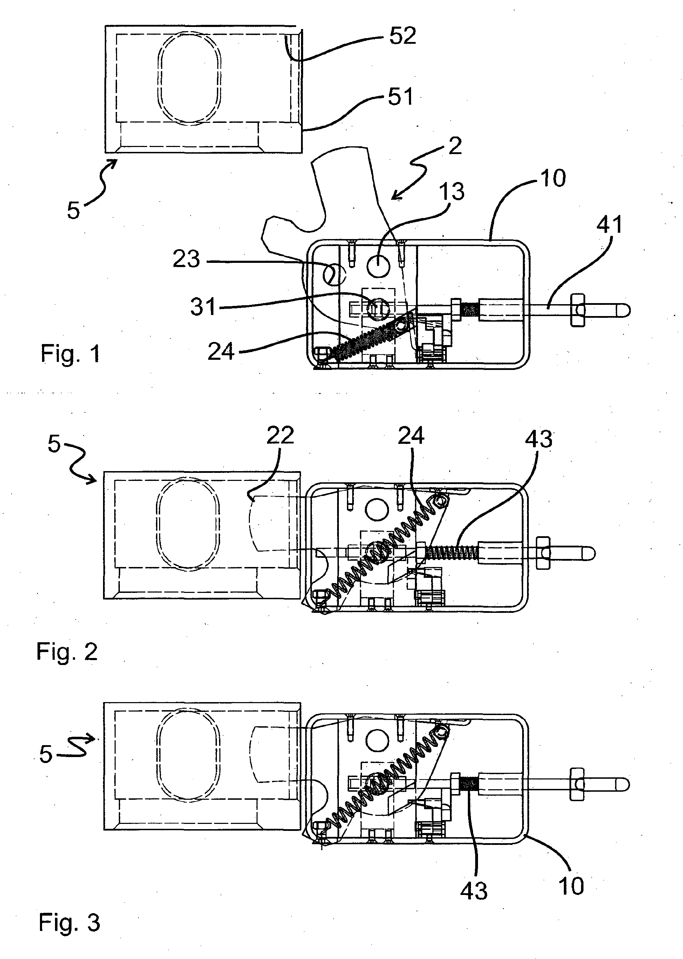

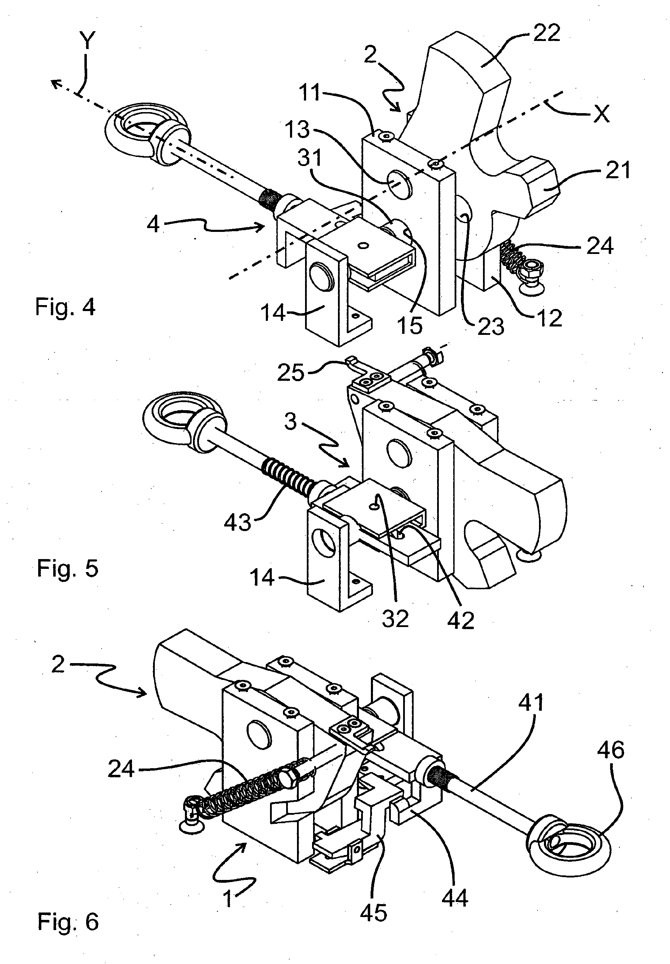

Die Figuren 1 bis 3 zeigen eine Horizontalverriegelungsvorrichtung in drei Funktionszuständen mit einem zugeordneten Eckbeschlag 5 eines nicht näher dargestellten Containers in Seitenansicht. Die Figuren 4 bis 6 zeigen in räumlicher Ansicht das Innenleben der Horizontalverriegelungsvorrichtung in seinen drei Funktionszuständen analog zu Figuren 1 bis 3.

In Fig. 1 ist die Horizontalverriegelungsvorrichtung in Seitenansicht dargestellt. Die Verriegelungsvorrichtung weist ein Gehäuse 10 auf, in dem eine Halterung 1 befestigt ist. Die Halterung 1 weist zwei Schenkel 11, 12 auf, die mit einer Welle 13 miteinander verbunden sind. In dem ersten Schenkel 11 ist eine Führungsöffnung 15 vorgesehen, die mit einem weiter unten beschriebenen Rastmittel 3 zusammenwirkt. Weiter ist für das Rastmittel 3 eine Abstützung 14 in dem Gehäuse 10 befestigt.

Auf der Welle 13 der Halterung 1 ist ein Schwenkriegel 2 um die durch die Welle 13 definierte Schwenkachse X schwenkbar geführt. Der Schwenkriegel 2 weist radial zur Schwenkachse X einen Betätigungshebel 21 und ein Riegelelement 22 auf. Ferner ist im Körper des Schwenkriegels 2 eine Öffnung 23 vorgesehen, die ebenfalls mit dem weiter unten beschriebenen Rastmittel 3 zusammenwirkt. Der Schwenkriegel 3 ist über eine erste Feder, hier Zugfeder 24, in Richtung seiner in Fig. 1 bzw. Fig. 4 dargestellten Grundstellung vorbelastet. Bezogen auf die Schwenkachse X befinden sich das Riegelelement 22 und der Betätigungshebel 21 auf einer Radialebene.

Der von beiden Elementen, dem Betätigungshebel 21 und dem Riegelelement 22 eingeschlossene Winkel α (bezogen auf die Schwenkachse X) beträgt im dargestellten Ausführungsbeispiel 60° Grad. Der Betätigungshebel 21 und das Riegelelement 22 ragen aus dem Gehäuse 10 der Horizontalverriegelungsvorrichtung heraus, da sie mit dem Eckbeschlag 5 eines Containers zusammenzuwirken haben. Dabei ist die Schwenkachse X so zum Eckbeschlag 5 eines aufzuladenden Containers ausgerichtet, dass sie parallel zu einer seitlichen Anlagefläche 51 des Eckbeschlags 5 und horizontal ausgerichtet ist.

Ferner ist an der Horizontalverriegelungsvorrichtung ein Rastmittel 3 vorgesehen, das aus einem axial in der Führungsöffnung 15 des Schenkels 11 bewegbaren Bolzens 31 besteht. Der Bolzen 31 reicht durch die Führungsöffnung 15 und kann bei Stellung des Schwenkriegels 2 in seiner Verriegelungsstellung (Fig. 2 bzw. 5) in die Öffnung 23 des Schwenkriegels 2 eingreifen. Am anderen Ende des Bolzens 31 ist ein Mitnehmer 32 angeordnet, der fest mit dem Bolzen 31 verbunden ist und zusätzlich auf der Abstützung 14 gelagert ist.

Das Vorauslösemittel 4 weist eine Zugstange 41 und eine Kulissenführung 42 auf. Die Kulissenführung 42 wirkt zusammen mit dem Mitnehmer 32 des Rastmittels 3, so dass bei Zug entlang der Zugachse Y über eine an der Zugstange 41 befestigte Zugöse 46 eine axiale Bewegung des Bolzens 31 über die Kulissenführung 42 und Mitnehmer 32 erzeugt wird.

Weiter hat das Vorauslösemittel 4 eine zweite Feder, hier eine Druckfeder 43, die die Zugstange 41 in Pfeilrichtung der Zugachse Y vorbelastet und somit über die Kulissenführung 42 und Mitnehmer 32 den Bolzen 31 in Richtung der Verrastungsstellung (Fig. 2 bzw. Fig. 5) vorbelastet. Ferner ist an der Zugstange 41 ein Vorsprung 44 vorgesehen, der mit einem beweglichen Anschlag 45 derart zusammenwirkt, dass der Vorsprung 44 an dem Anschlag 45 anliegt, nachdem die Zugstange 41 des Vorauslösemittels 4 manuell herausgezogen wurde. Ferner ist der bewegliche Anschlag 45 so ausgebildet, dass die am Schwenkriegel 2 angeordnete Auslösenase 25 bei Erreichen der Grundstellung des Schwenkriegels 2 so verstellt wird, dass der Vorsprung 44 freigegeben wird.

Nachfolgend wird ein Belade- und Entladevorgang, insbesondere anhand der Figuren 1 bis 3, erläutert. Dabei bedeuten Grundstellung der in den Figuren 1 bzw. 4 dargestellte Zustand des Schwenkriegels, nämlich die Bereitschaft für die Beladung mit einem Container; Verriegelungsstellung bedeutet die in den Figuren 2 bzw. 5 dargestellte Stellung des Schwenkriegels 2 mit dem in den Eckbeschlag 5 des Containers eingegriffenen Riegelelement 22; Verrastungsstellung bedeutet dabei die insbesondere in Fig. 5 ersichtliche Verrastung des Rastmittels 3 in den Schwenkriegel 2 in seiner Verriegelungsstellung.

In Fig. 1 befindet sich der Schwenkriegel 2 der Horizontalverriegelungsvorrichtung in seiner Grundstellung. Die Zugfeder 24 hält den Schwenkriegel 2 dabei in dieser Position. Die Horizontalverriegelungsvorrichtung ist somit nun bereit für die Beladung mit einem Container. Der in Fig. 1 dargestellte Eckbeschlag 5 eines nicht näher gezeigten Containers nähert sich nun der Horizontalverriegelungsvorrichtung, wobei mit weiterem Absenken des Containers die Unterseite des Eckbeschlags 5 mit dem Betätigungshebel 21 des Schwenkriegels 2 in Kontakt gelangt und beim weiteren Absenken der Schwenkriegel 2 über den durch das Gewicht des Containers betätigten Betätigungshebel 21 um die Schwenkachse X in Zeichenebene der Fig. 1 gegen den Urzeigersinn in die in Fig. 2 dargestellte Stellung verstellt wird. Dabei wird durch die Gewichtskraft des Containers die Zugfeder 24 gespannt. Beim Verschwenken des Schwenkriegels 2 gegen den Uhrzeigersinn zwischen den Darstellungen der Fig. 1 und 2 gelangt das Riegelelement 22 in die seitliche Öffnung 52 des Eckbeschlags des aufgeladenen Containers.

Bei Erreichen der in Fig. 2 dargestellten Verriegelungsstellung wird das über die vorgespannte Druckfeder 43 in Richtung seiner Verrastungsstellung vorbelastetes Rastmittel 3 dadurch aktiviert, dass die Öffnung 23 des Schwenkriegels 2 vor den Bolzen 31 des Rastmittels 3 gelangt und der Bolzen 31 über die Vorbelastung durch die Feder 43, die Zugstange 41 und dessen Kulissenführung 42 und Mitnehmer 32 in die Öffnung 23 drängt und somit die durch die Gewichtskraft des Containers erreichte Verriegelungsstellung des Schwenkriegels 2 verrastet wird.

Nunmehr befindet sich die Horizontalverriegelungsvorrichtung in verrasteter Verriegelungsstellung, womit beispielsweise der Straßentransport durchgeführt werden darf. Die Verriegelung und zusätzliche Verrastung erfolgt dabei vollautomatisch.

Soll nun der Container wieder entladen werden, ist ausgehend von der Stellung der Fig. 2 nunmehr von einer Bedienperson, beispielsweise dem Kraftfahrer, oder auch fernbetätigt das Vorauslösemittel 4 zu betätigen. Dabei ist an der Zugöse 46 der Zugstange 41 zu ziehen, bis die Zugstange 41 mit ihrem Vorsprung 44 den beweglichen Anschlag 45 übergreift. Nunmehr ist die Druckfeder 43 des Vorauslösemittels 4 gespannt. Durch die Zugbewegung der Zugstange 41 wird zudem über die Kulissenführung 42 der Bolzen 31 des Rastmittels 3 aus der Öffnung 23 des Schwenkriegels 2 herausgezogen, womit die Verrastung aufgehoben ist.

Somit kann nun in der in Fig. 3 dargestellten Stellung der Container senkrecht nach oben abgehoben werden. Der Schwenkriegel 2 wird dabei über Zugfeder 24 wieder in die in Fig. 1 dargestellte Grundstellung verschwenkt. Bei Erreichen der Grundstellung gelangt dabei die Auslösenase 25 mit dem beweglichen Anschlag 45 in Kontakt und schwenkt den Anschlag unter dem Vorsprung 44 des Vorauslösemittels 4 weg, so dass die Kraft der Druckfeder 43 über die Kulissenführung 42 und Mitnehmer 32 auf den Bolzen 31 des Rastmittels 3 lastet. Der Bolzen 31 kann jedoch in der Grundstellung des Schwenkriegels 2 nicht verrasten, da er auf der glatten Oberfläche des Schwenkriegels 2 aufliegt und nicht in die Öffnung 23 eingreifen kann. Nunmehr ist die Horizontalverriegelungsvorrichtung wieder bereit für eine erneute Beladung.

### Bezugszeichenliste

- 1: Halterung
- 10: Gehäuse
- 11: Schenkel
- 12: Schenkel
- 13: Welle
- 14: Abstützung
- 15: Führungsöffnung

- 2: Schwenkriegel
- 21: Betätigungshebel
- 22: Riegelelement
- 23: Öffnung
- 24: Zugfeder, erste Feder
- 25: Auslösenase

- 3: Rastmittel
- 31: Bolzen
- 32: Mitnehmer

- 4: Vorauslösemittel
- 41: Zugstange
- 42: Kulissenführung
- 43: Druckfeder, zweite Feder
- 44: Vorsprung
- 45: beweglicher Anschlag
- 46: Zugöse

- 5: Eckbeschlag
- 51: Anlagefläche
- 52: seitliche Öffnung

- α: Winkel
- X: Schwenkachse
- Y: Zugachse

## Patentansprüche

1. Horizontalverriegelungsvorrichtung zur Verriegelung eines Containers mit Eckbeschlag (5) auf einem Transportfahrzeug, insbesondere für Gooseneck-Auflieger, mit einer Halterung (1), die im Beladungszustand mit dem Container horizontal neben dem Eckbeschlag (5) und naheliegend an einer Anlagefläche (51) des Eckbeschlags (5) auf dem Transportfahrzeug angeordnet ist, wobei an der Halterung (1) ein Schwenkriegel (2) vorgesehen ist, der um eine parallel zur Anlagefläche (51) des Eckbeschlages (5) und horizontal angeordnete Schwenkachse (X) von einer Grundstellung in eine nach unten geschwenkte Verriegelungsstellung, in der der Schwenkriegel (2) in den Eckbeschlag (5) eingreift, schwenkbar ist, wobei ein Rastmittel (3), das bei Erreichen der Verriegelungsstellung den Schwenkriegel (2) in dieser Stellung verrastet, und ein Vorauslösemittel (4), das bei Betätigung die Verrastung des Schwenkriegels (2) freigibt, so dass der Container entladen werden kann, vorgesehen sind, **dadurch gekennzeichnet, dass** der Schwenkriegel (2) in Richtung seiner Grundstellung mit einer ersten Feder (24) vorbelastet ist und beim Beladen vom Gewicht des Containers gegen seine Vorbelastung in die Verriegelungsstellung verschwenkt wird und der Schwenkriegel (2) einstückig zwei im Wesentlichen radial zur Schwenkachse (X) vorstehende Elemente aufweist, nämlich einen Betätigungshebel (21), mit dem der Eckbeschlag (5) des Containers beim Absetzen zum Verschwenken des Schwenkriegels (2) zusammenwirkt, und ein oberhalb angeordnetes Riegelelement (22), das mit einer seitlichen Öffnung (52) des Eckbeschlags (5) beim Absetzen des Containers in Eingriff gelangt, wobei das Rastmittel (3) einen in der Halterung zur Schwenkachse parallel angeordneten, axial beweglichen Bolzen (31) aufweist, der in der Verriegelungsstellung des Schwenkriegels (2) mit einer Öffnung im Schwenkriegel verrastbar ist, und das Vorauslösemittel (4) eine Zugstange (41) und eine Kulissenführung (42) aufweist, wobei die Kulissenführung (42) mit dem Bolzen (31) zum axialen Bewegen zusammenwirkt und die Zugstange (41) und damit der Bolzen (31) in Richtung seiner Verrastungsstellung vorbelastet sind.

2. Horizontalverriegelungsvorrichtung nach Anspruch 1, **dadurch gekennzeichnet, dass** das Vorauslösemittel (4) einen beweglichen Anschlag (45) hat, der nach Betätigung der Zugstange (41) die Vorbelastung auf die Verrastungsstellung abfängt und nach dem Entladevorgang freigibt.

3. Horizontalverriegelungsvorrichtung nach Anspruch 1 oder 2, **dadurch gekennzeichnet, dass** das Riegelelement (22) und der Betätigungshebel (21) auf einer Radialebene bezogen auf die Schwenkachse (X) in einem Winkel α mit 45°≤ α ≤ 90, bevorzugt α = 60° zueinander angeordnet sind.

4. Horizontalverriegelungsvorrichtung nach einem der vorangehenden Ansprüche, **dadurch gekennzeichnet, dass** die Zugstange (41) mit einer zweiten Feder (43) in Richtung der Verrastungsstellung vorbelastet ist.

## Claims

1. A horizontal locking device for locking a container with a corner fitting (5) on a transport vehicle, in particular for gooseneck semitrailers, having a support (1), which in the container loading state is arranged on the transport vehicle so as to be horizontally alongside the corner fitting (5) and close to a contact surface (51) of the corner fitting (5), wherein on the support (1) there is provided a pivoting latch (2) which is pivotable, about a horizontally arranged pivot axis (X) which is parallel to the contact surface (51) of the corner fitting (5), from an initial position into a downwards pivoted locking position in which the pivoting latch (2) engages the corner fitting (5), wherein an engagement-locking means (3), which engagement-locks the pivoting latch (2) in the locking position when this position is reached, and a pre-releasing means (4), which upon actuation releases the engagement-locking of the pivoting latch (2) so that the container can be unloaded, are provided, **characterized in that** the pivoting latch (2) is biased, by means of a first spring (24), in the direction of its initial position and upon loading is pivoted, against its biasing, into the locking position by the weight of the container and the pivoting latch (2) integrally has two elements projecting substantially radially to the pivot axis (X), namely an actuating lever (21), with which the corner fitting (5) of the container cooperates upon depositing for pivoting of the pivoting latch (2), and a latch element (22), arranged above, which engages a lateral opening (52) of the corner fitting (5) upon depositing of the container, wherein the engagement-locking means (3) has an axially movable bolt (31) arranged in the support so as to be parallel to the pivot axis, which bolt (31) is engagement-lockable with an opening in the pivoting latch in the locking position of the pivoting latch (2), and the pre-releasing means (4) has a pulling rod (41) and a slotted link guide (42), wherein the connecting link guide (42) cooperates with the bolt (31) for axial motion and the pulling rod (41) and thereby the bolt (31) are biased in the direction of its engagement-locking position.

2. A horizontal locking device according to claim 1, **characterized in that** the pre-releasing means (4) has a movable stop (45) which after actuation of the pulling rod (41) thwarts the biasing to the engagement-locking position and allows it after the loading procedure.

3. A horizontal locking device according to claim 1 or 2, **characterized in that** the latch element (22) and the actuating lever (21) are on a radial plane related to the pivot axis (X) arranged at an angle α to one another with 45° ≤ α ≤ 90, preferably α = 60°.

4. A horizontal locking device according to any one of the preceding claims, **characterized in that** the pulling rod (41) is biased in the direction of the engagement-locking position by means of a second spring (43).

## Revendications

1. Dispositif de verrouillage horizontal servant à verrouiller un conteneur pourvu d'une ferrure d'angle (5) sur un véhicule de transport, en particulier pour des semi-remorques de type gooseneck, comprenant un élément de retenue (1) qui est disposé sur le véhicule de transport horizontalement à côté de la ferrure d'angle (5) et à proximité d'une surface d'appui (51) de la ferrure d'angle (5) lorsque le conteneur est chargé, un verrou pivotant (2) étant présent sur l'élément de retenue (1), lequel verrou peut pivoter autour d'un axe de pivotement (X) disposé parallèlement à la surface d'appui (51) de la ferrure d'angle (5) et horizontalement, d'une position de base dans une position de verrouillage pivotée vers le bas dans laquelle le verrou pivotant (2) s'insère dans la ferrure d'angle (5), un moyen d'encliquetage (3) étant prévu qui, lorsque la position de verrouillage est atteinte, encliquète le verrou pivotant (2) dans cette position, et un moyen de libération préalable (4) étant prévu qui, lorsqu'il est actionné, libère l'encliquetage du verrou pivotant (2) de sorte que le conteneur peut être déchargé, **caractérisé en ce que** le verrou pivotant (2) est précontraint en direction de sa position de base par un premier ressort (24) et, lors du déchargement du poids du conteneur, est amené à pivoter à l'encontre de sa précontrainte dans la position de verrouillage, et le verrou pivotant (2) comporte d'un seul tenant deux éléments faisant saillie sensiblement radialement par rapport à l'axe de pivotement (X), à savoir un levier d'actionnement (21) avec lequel la ferrure d'angle (5) du conteneur coopère, lorsque ce dernier est déposé, pour faire pivoter le verrou pivotant (2), et un élément de verrouillage (22) disposé au-dessus et qui vient en prise avec une ouverture latérale (52) de la ferrure d'angle (5) lorsque le conteneur est déposé, le moyen d'encliquetage (3) comportant un boulon (31) disposé dans l'élément de retenue parallèlement à l'axe de pivotement et mobile axialement, lequel boulon peut être encliqueté dans la position de verrouillage du verrou pivotant (2) par une ouverture dans le verrou pivotant, et le moyen de libération préalable (4) comporte une barre de traction (41) et un guide-coulisse (42), le guide-coulisse (42) coopérant avec le boulon (31) pour effectuer un déplacement axial, et la barre de traction (41) et avec elle le boulon (31) étant précontraints en direction de la position de verrouillage de ce dernier.

2. Dispositif de verrouillage horizontal selon la revendication 1, **caractérisé en ce que** le moyen de libération préalable (4) est muni d'une butée mobile(45) qui, après actionnement de la barre de traction (41), bloque la précontrainte dans la position de verrouillage et la libère après le processus de déchargement.

3. Dispositif de verrouillage horizontal selon la revendication 1 ou 2, **caractérisé en ce que** l'élément de verrouillage (22) et le levier d'actionnement (21) forment entre eux, dans un plan radial rapporté à l'axe de pivotement (X), un angle α tel que 45°≤ α ≤90, de préférence α = 60°.

4. Dispositif de verrouillage horizontal selon l'une des revendications précédentes, **caractérisé en ce que** la barre de traction (41) est précontrainte en direction de la position d'encliquetage par un deuxième ressort (43).
